(19) Europäisches Patentamt
European Patent Office
Office européen des brevets

(11) **EP 2 821 689 A1**

(12) **EUROPEAN PATENT APPLICATION**

(43) Date of publication:
**07.01.2015 Bulletin 2015/02**

(51) Int Cl.:
**F21K 99/00** *(2010.01)*      **F21S 8/10** *(2006.01)*
**F21V 8/00** *(2006.01)*       **F21V 9/16** *(2006.01)*
**G02B 6/00** *(2006.01)*       *F21Y 101/02* *(2006.01)*

(21) Application number: **14173793.2**

(22) Date of filing: **25.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.07.2013 JP 2013139272**

(71) Applicant: **Toshiba Lighting & Technology Corporation**
**Yokosuka-shi**
**Kanagawa 237-8510 (JP)**

(72) Inventor: **Tsuchiya, Ryuji**
**Yokosuka-shi, Kanagawa, 237-8510 (JP)**

(74) Representative: **Bokinge, Ole**
**Awapatent AB**
**Junkersgatan 1**
**582 35 Linköping (SE)**

(54) **Light emitting device and lighting device**

(57)    According to an embodiment, a light emitting device (10) includes: a light emitting section (12) that has a light emitting element (12b); a wavelength conversion section (14) that absorbs light radiated from the light emitting section (12) and emits the light having a wavelength different from that of the light radiated from the light emitting section (12); and a light guide section (13) that is provided between the light emitting section (12) and the wavelength conversion section (14) and to propagate the light radiated from the light emitting section (12), and includes a first irradiation surface (13b) which radiates the propagated light toward a position in which the wavelength conversion section (14) is provided, and a second irradiation surface (13c) which radiates the propagated light toward a position different from the position in which the wavelength conversion section (14) is provided.

FIG. 1B

EP 2 821 689 A1

**Description**

FIELD

Embodiments described herein relate generally to a light emitting device and a lighting device.

BACKGROUND

There is known a light emitting device including a Light Emitting Diode (LED), a wavelength conversion section containing a phosphor, and a light guide body guiding light radiated from the light emitting diode to the wavelength conversion section. If the light guide body guiding the light radiated from the light emitting diode to the wavelength conversion section is provided, it is possible to efficiently guide the light radiated from the light emitting diode to the wavelength conversion section.

However, since the light radiated from the light emitting device is only the light obtained through the wavelength conversion section, a rendering property is lost.

In this case, if a plurality of light emitting devices are provided for improving the rendering property, there is a concern that miniaturization and cost reduction are not achieved.

BRIEF DESCRIPTION OF THE DRAWINGS

FIG. 1A is a schematic external view illustrating a light emitting device and a lighting device according to an embodiment and FIG. 1B is a schematic cross-sectional view illustrating the light emitting device and the lighting device according to the embodiment.
FIG. 2A is a schematic external view illustrating a light emitting device and a lighting device according to another embodiment and FIG. 2B is a schematic cross-sectional view illustrating the light emitting device and the lighting device according to the other embodiment.
FIG. 3 is a schematic cross-sectional view illustrating a light guide section according to another embodiment.
FIG. 4 is a schematic cross-sectional view illustrating a light guide section according to still another embodiment.
FIG. 5 is a schematic cross-sectional view illustrating a light guide section according to still another embodiment.
FIG. 6 is a schematic cross-sectional view illustrating a light guide section according to still another embodiment.
FIG. 7 is a schematic cross-sectional view illustrating a light guide section according to still another embodiment.
FIG. 8 is a schematic cross-sectional view illustrating a light guide section according to still another embodiment.
FIG. 9 is a schematic cross-sectional view illustrating a light guide section according to still another embodiment.
FIG. 10 is a schematic cross-sectional view illustrating a light guide section according to still another embodiment.
FIGS. 11A and 11B are schematic cross-sectional views illustrating a light guide section according to still another embodiment.

DETAILED DESCRIPTION

According to an embodiment, a light emitting device includes: a light emitting section that has a light emitting element; a wavelength conversion section that absorbs light radiated from the light emitting section and emits the light having a wavelength different from that of the light radiated from the light emitting section; and a light guide section that is provided between the light emitting section and the wavelength conversion section and to propagate the light radiated from the light emitting section, and includes a first irradiation surface which radiates the propagated light toward a position in which the wavelength conversion section is provided, and a second irradiation surface which radiates the propagated light toward a position different from the position in which the wavelength conversion section is provided.

According to the light emitting device, it is possible to achieve improvement of a rendering property.

Furthermore, the light guide section may have at least one of a shape in which a cross-sectional area in a direction orthogonal to a central axis is decreased gradually as being closer to an end section on the side in which the wavelength conversion section is provided and a shape in which the cross-sectional area is decreased in stages as being closer to the end section. The second irradiation surface may be provided in at least one of a region in which the cross-sectional area is decreased gradually and a region in which the cross-sectional area is decreased in stages.

In this case, it is possible to achieve improvement of the rendering property.

Furthermore, the second irradiation surface may be provided with a concave and convex portion.

In this case it is possible to achieve improvement of the rendering property.

Furthermore, the light emitting device may further include a light leak section that comes into contact with the second irradiation surface. A difference between a refractive index of the light leak section and a refractive index of the light guide section may be smaller than that between a refractive index of air and the refractive index of the light guide section.

In this case, it is possible to achieve improvement of the rendering property.

Furthermore, the light guide section may have a core section that propagates the light radiated from the light emitting section and a clad section that covers a surface of the core section in a direction intersecting a direction in which the light is propagated. Then, the following expression may be satisfied.

$$2\theta_{1/2} \geq Sin^{-1}NA$$

Here, $2\theta_{1/2}$ is a light distribution angle of the light emitting section and NA is a numerical aperture.

In this case, it is possible to achieve improvement of the rendering property.

According to another embodiment, a lighting device includes: the light emitting device according to the embodiments; and a housing that stores the light emitting section provided in the light emitting device and holds the light guide section provided in the light emitting device.

According to the lighting device, it is possible to achieve improvement of the rendering property.

Furthermore, the wavelength conversion section provided in the light emitting device may be provided at a focal point of a reflector of a lamp fitting when mounting the lighting device on the lamp fitting.

In this case, it is possible to obtain light distribution and light emission intensity, for example, based on vehicle laws, and to achieve the improvement of the rendering property.

Hereinafter, embodiments will be described with reference to the drawings. Moreover, in the drawings, the same reference numerals are given to the same configuration elements and detailed description thereof is appropriately omitted.

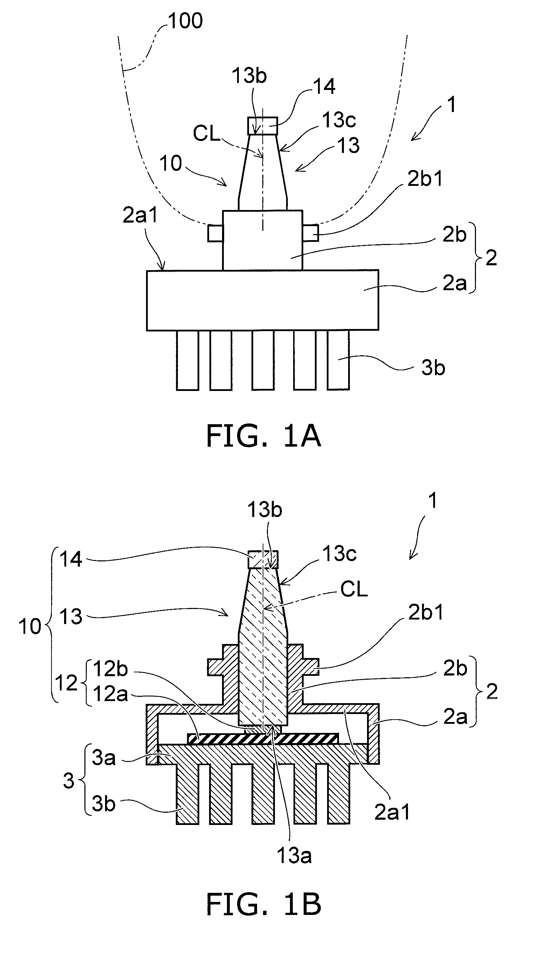

FIG. 1A is a schematic external view illustrating a light emitting device 10 and a lighting device 1 according to an embodiment.

FIG. 1B is a schematic cross-sectional view illustrating the light emitting device 10 and the lighting device 1 according to the embodiment.

As illustrated in FIGS. 1A and 1B, the lighting device 1 is provided with a housing 2, a heat radiating section 3, and the light emitting device 10.

The housing 2 has a storage section 2a and a holding section 2b.

The storage section 2a has a cylindrical shape and of which one end section is closed by a flange section 2a1. The flange section 2a1 is provided with a hole for inserting a light guide section 13. An end section of the storage section 2a on the opposite side of a side on which the flange section 2a1 is provided is open. The opening of the storage section 2a is connected to a mounting section 3a of the heat radiating section 3 and is thereby closed. A substrate 12a and a light emitting element 12b are stored inside the storage section 2a.

The holding section 2b has a cylindrical shape and protrudes from the flange section 2a1. The holding section 2b is provided directly over the hole of the flange section 2a1. Then, the light guide section 13 is inserted into the inside of the holding section 2b and the hole of the flange section 2a1. In this case, the light guide section 13 is held inside the holding section 2b. For example, a convex section (not illustrated) is provided on an outer wall surface of the light guide section 13 and a concave section (not illustrated) is provided on the inside of the holding section 2b. Then, it is possible to hold the light guide section 13 on the inside of the holding section 2b by engaging the convex section of the light guide section 13 with the concave section of the holding section 2b. Furthermore, it is possible to hold the light guide section 13 on the inside of the holding section 2b by using an adhesive or the like.

A plurality of convex sections 2b1 protrude on the outer wall surface of the holding section 2b. For example, the plurality of convex sections 2b1 holds the lighting device 1 in a lamp fitting (not illustrated) by cooperating with a mounting member on the side of the lamp fitting when mounting the lighting device 1 on the lamp fitting (not illustrated). Furthermore, a seal member formed of a material such as rubber or silicone resin may be provided between the plurality of convex sections 2b1 and the flange section 2a1.

The housing 2 has a function of storing the substrate 12a and the light emitting element 12b, a function of holding the light guide section 13, and a function of radiating heat generated in the light emitting element 12b and the like to the outside of the lighting device 1.

Thus, the housing 2 may be formed of a material having a high thermal conductivity by taking into account that the heat is radiated to the outside. For example, the housing 2 may be formed of aluminum, aluminum alloy, high thermal conductive resin, and the like. The high thermal conductive resin is, for example, obtained by mixing fibers or particles of carbon or aluminum oxide having a high thermal conductivity into a resin such as Polyethyleneterephthalate (PET) or nylon.

The heat radiating section 3 has the mounting section 3a and fins 3b.

The mounting section 3a has a disk shape and the substrate 12a is provided on one main surface thereof. The mounting section 3a is held inside the storage section 2a. For example, the mounting section 3a is bonded on the inside of the storage section 2a by the adhesive or the like.

A plurality of fins 3b are provided on the main surface of the mounting section 3a on the opposite side of the side on which the substrate 12a is provided.

The fin 3b has a plate shape and protrudes from the main surface of the mounting section 3a. The plurality of fins 3b are provided and function as heat radiating fins.

The fin 3b is formed of a material having a high thermal conductivity. For example, the fin 3b may be formed of aluminum, aluminum alloy, high thermal conductive resin described above, and the like.

The light emitting device 10 is provided with a light emitting section 12, the light guide section 13, and a wavelength conversion section 14. The light emitting section 12 has the substrate 12a and the light emitting element 12b.

The substrate 12a has a plate shape and a wiring pattern (not illustrated) is provided on the surface thereof.

For example, the substrate 12a may be formed of ceramics such as aluminum oxide or aluminum nitride, an organic material such as paper phenol or glass epoxy, a metal plate coated with an insulation material on a surface thereof, and the like.

Moreover, if the insulation material is coated on the surface of the metal plate, the insulation material may be an organic material and may be an inorganic material.

If a heating amount of the light emitting element 12b is large, it is preferable that the substrate 12a be formed using a material having a high thermal conductivity in view of heat radiation. As the material having a high thermal conductivity, ceramics such as aluminum oxide or aluminum nitride, high thermal conductive resin, a metal plate coated with an insulation material on a surface thereof, and the like may be exemplified.

Furthermore, the substrate 12a may be a single-layer and may also be a multi-layer.

For example, the light emitting element 12b may be a light emitting diode, a laser diode, or the like.

The number of the light emitting elements 12b is not specifically limited. The number of the light emitting elements 12b may be appropriately changed depending on usage of the lighting device 1, an area of an incident surface 13a of the light guide section 13, or the like. If a plurality of light emitting elements 12b are provided, the plurality of light emitting elements 12b may be regularly arranged in a matrix shape, a concentric shape, or the like, and may be arbitrarily arranged.

A connection method of the light emitting element 12b to the wiring pattern (not illustrated) provided on the surface of the substrate 12a is not specifically limited. The light emitting element 12b may be mounted by a Chip On Board (COB) being directly connected to the wiring pattern (not illustrated) and may be mounted on the wiring pattern (not illustrated) through a lead being provided inside an envelope.

An irradiation surface (upper surface) for the light of the light emitting element 12b faces the incident surface 13a of the light guide section 13. Thus, the light emitted from the light emitting section 12 is efficiently introduced into the light guide section 13.

Furthermore, the substrate 12a may be appropriately provided with a circuit part such as a resistor, a capacitor, and a diode, if necessary.

One end of a power supply terminal (not illustrated) is connected to the wiring pattern of the substrate 12a. The other end of the power supply terminal (not illustrated) is exposed from the mounting section 3a of the heat radiating section 3. An external power supply and the like are connected to the power supply terminal (not illustrated) exposed from the mounting section 3a of the heat radiating section 3 through a socket and the like (not illustrated).

The light guide section 13 has a columnar shape.

The light guide section 13 has the incident surface 13a, a first irradiation surface 13b, and a second irradiation surface 13c.

The incident surface 13a faces the irradiation surface of the light emitting section 12.

The first irradiation surface 13b faces the wavelength conversion section 14. The light is radiated from the first irradiation surface 13b toward a position in which the wavelength conversion section 14 is provided.

The light is radiated from the second irradiation surface 13c toward a position that is different from the position in which the wavelength conversion section 14 is provided.

That is, the light guide section 13 is provided between the light emitting section 12 and the wavelength conversion section 14. The light guide section 13 propagates the light radiated from the light emitting section 12. The light guide section 13 has the first irradiation surface 13b that radiates the propagated light toward the position in which the wavelength conversion section 14 is provided, and the second irradiation surface 13c that radiates the propagated light toward the position different from the position in which the wavelength conversion section 14 is provided.

In a case of the light guide section 13 illustrated in FIGS. 1A and 1B, the first irradiation surface 13b faces the incident surface 13a. The second irradiation surface 13c is provided so as to extend in a direction intersecting a direction in which the first irradiation surface 13b extends.

Furthermore, the second irradiation surface 13c is inclined so that an end section thereof on the side provided with the wavelength conversion section 14 is close to a central axis CL of the light guide section 13.

That is, the light guide section 13 has a shape in which a cross-sectional area in a direction orthogonal to the central axis CL is decreased gradually as being closer to the end section on the side in which the wavelength conversion section 14 is provided. Then, the second irradiation surface 13c is provided in a region in which the cross-sectional area decreases.

Furthermore, the first irradiation surface 13b and the second irradiation surface 13c are exposed from the holding section 2b.

The light guide section 13 is formed of a material having a high transmittance with respect to the light radiated from the light emitting section 12. For example, the light guide section 13 may be formed of an inorganic material such as glass or translucent ceramics, a transparent resin such as polycarbonate, polystyrene, acrylic, and the like.

A cross-sectional shape of the light guide section 13 in a direction orthogonal to the central axis CL is not specifically limited. The cross-sectional shape of the light guide section 13 in the direction orthogonal to the central axis CL may be, for example, circular, rectangular, or the like. Furthermore, in FIGS. 1A and 1B, a case where the light guide section 13 is a linear columnar body is illustrated, but the light guide section 13 may be a curved columnar body.

As described below, the light radiated from the second irradiation surface 13c is mainly used for improving a rendering property.

Thus, if the light radiated from the second irradiation surface 13c is too much, there is a concern that a function as the lighting device 1 may be damaged or power consumption may increase.

Meanwhile, unintentionally leaked light leaking from a general light guide section may not improve the rendering property because the radiated light is too small.

Thus, it is preferable that a total amount of energy of the light radiated from the second irradiation surface 13c be 5% or more and 30% or less of a total amount of energy of the light incident on the incident surface 13a.

The wavelength conversion section 14 absorbs the light radiated from the light emitting section 12 and emits the light having a wavelength different from the wavelength of the light radiated from the light emitting section 12.

That is, the wavelength conversion section 14 converts a wavelength of the light introduced through the first irradiation surface 13b. For example, the wavelength conversion section 14 may be formed of a material having translucency such as silicone resin, and a phosphor.

When the light introduced into the wavelength conversion section 14 is incident on the phosphor, the phosphor is excited and fluorescence is emitted from the phosphor. Thus, the wavelength of the light introduced through the first irradiation surface 13b may be converted.

In this case, it is possible to change the wavelength of the light radiated from the wavelength conversion section 14 by appropriately selecting the wavelength of the light radiated from the light emitting element 12b or a type of the phosphor.

For example, if the lighting device 1 is used in a vehicle or the like, it may be as follows.

If the lighting device 1 is used in a headlamp, a fog lamp, a daytime running light (DRL), a front position lamp, and the like, the light emitting element 12b may be a blue light emitting diode and the phosphor may radiate yellow fluorescence. In this case, some of the light radiated from the light emitting section 12 is incident on the phosphor and the yellow fluorescence is radiated from the phosphor. Then, white light is radiated from the wavelength conversion section 14 by mixing blue light and yellow light. In this case, it is possible to use the phosphor radiating red fluorescence and the phosphor radiating green fluorescence instead of the phosphor radiating yellow fluorescence. In this case, the white light is radiated from the wavelength conversion section 14 by mixing the blue light, the red light, and the green light.

If the lighting device 1 is used in a brake light, a refract and rotate position lamp, a high-mount stop lamp, a refract and rotate fog lamp, and the like, the light emitting element 12b may be the blue light emitting diode and the phosphor may radiate red fluorescence. In this case, all the blue light radiated from the light emitting element 12b is converted into red light and the red light is radiated from the wavelength conversion section 14.

If the lighting device 1 is used in a turn lamp and the like, the light emitting element 12b may be the blue light emitting diode and the phosphor may radiate orange fluorescence. In this case, all the blue light radiated from the light emitting element 12b is converted into orange light and the orange light is radiated from the wavelength conversion section 14.

Next, operation of the light emitting device 10 and the lighting device 1 is illustrated.

When inputting power to the light emitting device 10, the light is radiated from the light emitting element 12b. The light radiated from the light emitting section 12 is introduced into the light guide section 13 through the incident surface 13a. The light introduced into the light guide section 13 propagates while being totally reflected on the inside of the light guide section 13.

The light propagating the inside of the light guide section 13 is introduced into the wavelength conversion section 14 through the first irradiation surface 13b.

The wavelength of the light introduced into the wavelength conversion section 14 is converted and the light is radiated from the wavelength conversion section 14 to the outside.

Here, since the second irradiation surface 13c is the inclined surface, a total reflection condition is reduced in some of the light incident on the second irradiation surface 13c. Thus, some of the light propagating the inside of the light guide section 13 is radiated to the outside through the second irradiation surface 13c.

The light radiated to the outside through the second irradiation surface 13c is not converted into the wavelength thereof.

Thus, the light having a different color is radiated from the lighting device 1.

As illustrated in FIG. 1A, an optical member such as a reflector 100 or a lens is provided in a lamp fitting (not illustrated) in which the lighting device 1 is provided for a desired light distribution of the light radiated from the lighting device 1.

In this case, if the wavelength conversion section 14 is provided at a focal point of the reflector 100, the light radiated from the wavelength conversion section 14 is collected in an irradiation position.

The light radiated from the second irradiation surface 13c is randomly radiated from an opening section of the reflector 100 because there is no optical coupling between the second irradiation surface 13c and the reflector 100. Thus, the light radiated from the second irradiation surface 13c becomes stray light.

That is, the light radiated from the wavelength conversion section 14 is collected in the irradiation position, but the light radiated from the second irradiation surface 13c is not collected in the irradiation position. Thus, it is possible to obtain the light distribution and light emission intensity based on vehicle laws.

Then, when the lighting device 1 is viewed from the outside, for example, the light (for example, blue light) radiated from the second irradiation surface 13c is viewed on the outside of a region in which the light is (for example, white light) radiated from the wavelength conversion section 14. Thus, it is possible to improve the rendering property.

Moreover, if the optical member such as the reflector 100 or the lens is designed in view of the position of the wavelength conversion section 14 and the position of the second irradiation surface 13c, it is possible to mix the light radiated from the wavelength conversion section 14 and the light radiated from the second irradiation surface 13c in desired proportions.

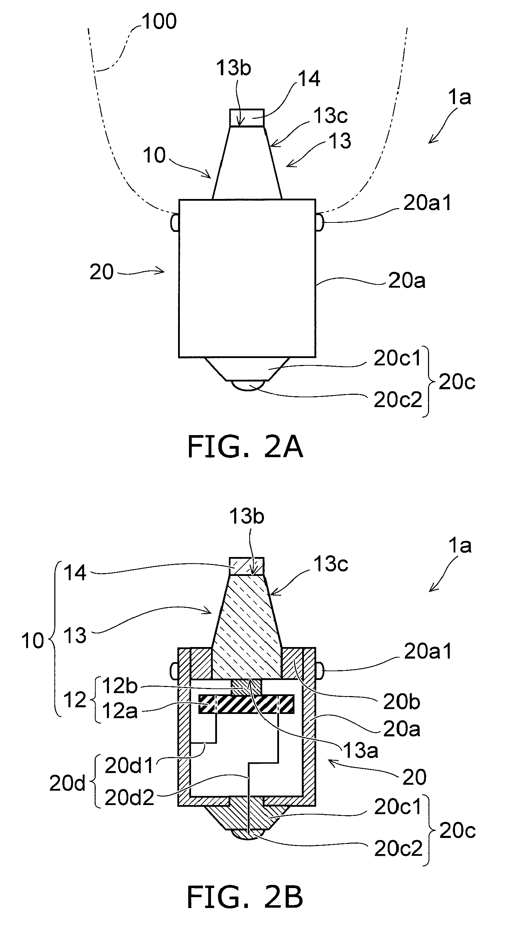

FIG. 2A is a schematic external view illustrating a light emitting device 10 and a lighting device 1a according to another embodiment.

FIG. 2B is a schematic cross-sectional view illustrating the light emitting device 10 and the lighting device 1a according to the other embodiment.

As illustrated in FIGS. 2A and 2B, the lighting device 1a is provided with a housing 20 and the light emitting device 10.

Housing 20 has a storage section 20a, a holding section 20b, a terminal section 20c, and a wiring section 20d.

The storage section 20a has a cylindrical shape having a bottom and one end section thereof is open. The opening of the storage section 20a is connected to the holding section 20b and is thereby closed. The substrate 12a and the light emitting element 12b are stored inside the storage section 20a.

The storage section 20a may have a function of a mouthpiece. Thus, for example, the storage section 20a may have an external shape of a screw type mouthpiece such as E26, E17, and E12 generally used in an incandescent light bulb, a plug type mouthpiece such as G4, P15d, P15s, BA15s, BA15d, BA9s, and the like.

Moreover, in order to prevent erroneous mounting, the storage section 20a may have a special shape.

The storage section 20a is formed of a conductive material such as metal.

A plurality of convex sections 20a1 protrude on an outer wall surface of the storage section 20a. For example, the plurality of convex sections 20a1 hold the lighting device 1a in the lamp fitting (not illustrated) by cooperating with a mounting member on the side of the lamp fitting when mounting the lighting device 1a on the lamp fitting (not illustrated).

The holding section 20b has a disk shape and is connected to the opening of the storage section 20a.

The holding section 20b is provided with a hole for inserting the light guide section 13. The hole of the holding section 20b is provided directly over the light emitting element 12b. In this case, the light guide section 13 is held inside the hole of the holding section 20b. For example, a convex section (not illustrated) is provided on the outer wall surface of the light guide section 13 and a concave section (not illustrated) is provided in the hole of the holding section 20b. Then, it is possible to hold the light guide section 13 in the holding section 2b by engaging the convex section of the light guide section 13 with the concave section of the holding section 20b. Furthermore, it is possible to hold the light guide section 13 in the holding section 20b by using an adhesive or the like.

When holding the light guide section 13 in the holding section 20b, the first irradiation surface 13b and the second irradiation surface 13c are exposed from the holding section 20b.

Moreover, a disk-shaped member may be provided on the outer wall surface of the light guide section 13 and the disk-shaped member may be connected to the opening of the storage section 20a. In this case, the storage section 20a also has the function of the holding section 20b.

The terminal section 20c has an insulating section 20c1 and a conductive section 20c2.

The insulating section 20c1 is provided in the hole provided in a bottom section of the storage section 20a. For example, the insulating section 20c1 is formed of an insulation material such as resin.

The conductive section 20c2 is provided in an end section of the insulating section 20c1 on the opposite side of the side of the storage section 20a.

The wiring section 20d has wiring 20d1 and wiring 20d2.

One end section of the wiring 20d1 is electrically connected to a wiring pattern (not illustrated) of the substrate 12a. The other end section of the wiring 20d1 is electrically connected to the storage section 20a.

One end section of the wiring 20d2 is electrically connected to a wiring pattern (not illustrated) of the substrate 12a. The other end section of the wiring 20d2 is electrically connected to the conductive section 20c2.

An external power supply is connected to the storage section 20a and the conductive section 20c2 through a socket and the like (not illustrated).

Also in the case of the lighting device 1a according to the embodiment, it is possible to obtain the same effect as the lighting device 1 described above.

For example, it is possible to obtain the light distribution and light emission intensity based on vehicle laws, and to achieve the improvement of the rendering property.

Next, a light guide section according to another embodiment is further illustrated.

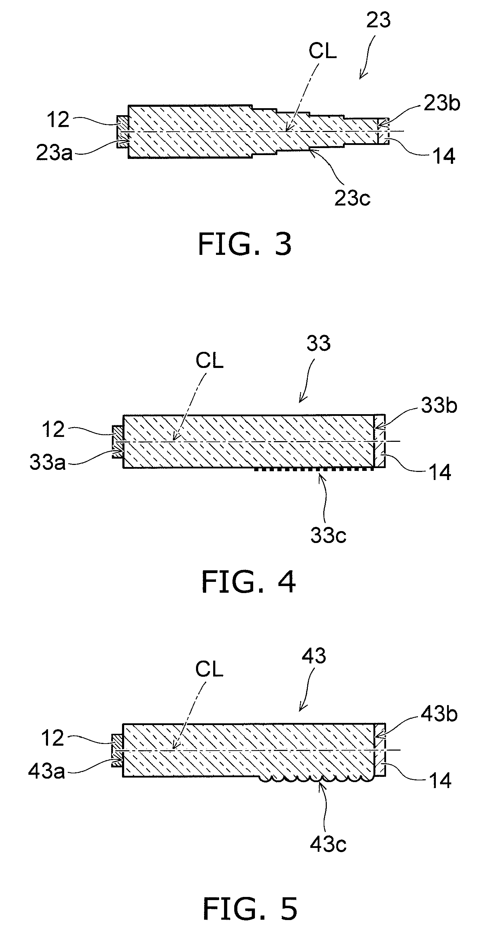

FIG. 3 is a schematic cross-sectional view illustrating a light guide section 23 according to another embodiment.

As illustrated in FIG. 3, the light guide section 23 has a columnar shape.

The light guide section 23 has an incident surface 23a, a first irradiation surface 23b, and a second irradiation surface 23c.

The incident surface 23a faces the irradiation surface of the light emitting section 12.

The first irradiation surface 23b faces the wavelength conversion section 14. The light is radiated from the first irradiation surface 23b toward a position in which the wavelength conversion section 14 is provided.

The light is radiated from the second irradiation surface 23c toward a position different from the position in which the wavelength conversion section 14 is provided.

In a case of the light guide section 23, the first irradiation surface 23b faces the incident surface 23a. The second irradiation surface 23c is provided so as to be parallel to the first irradiation surface 23b.

That is, a cross-sectional area of a region of the light guide section 23 in which the second irradiation surface 23c is provided in a direction orthogonal to the central axis CL of the light guide section 23 is decreased in stages as being closer to the side in which the wavelength conversion section 14 is provided.

Moreover, the first irradiation surface 23b and the second irradiation surface 23c are exposed from the holding sections 2b and 20b similar to the light guide section 13 described above.

Furthermore, the material of the light guide section 23 or the cross-sectional shape of the light guide section 23 in the direction orthogonal to the central axis CL may be similar to the case of the light guide section 13 described above.

The light radiated from the light emitting section 12 is introduced into the light guide section 23 through the incident surface 23a. The light introduced into the light guide section 23 propagates while being totally reflected on the inside of the light guide section 23.

The light propagating the inside of the light guide section 23 is introduced into the wavelength conversion section 14 through the first irradiation surface 23b.

The wavelength of the light introduced into the wavelength conversion section 14 is converted and the light is radiated from the wavelength conversion section 14 to the outside.

Here, the second irradiation surface 23c is provided so as to be parallel to the first irradiation surface 23b. Thus, some of the light incident on the second irradiation surface 23c among the light propagating the inside of the light guide section 23 is radiated to the outside through the second irradiation surface 23c.

Thus, the light guide section 23 can obtain the effect similar to the light guide section 13 described above.

FIG. 4 is a schematic cross-sectional view illustrating a light guide section 33 according to still another embodiment.

As illustrated in FIG. 4, the light guide section 33 has a columnar shape.

The light guide section 33 has an incident surface 33a, a first irradiation surface 33b, and a second irradiation surface 33c.

The incident surface 33a faces the irradiation surface of the light emitting section 12.

The first irradiation surface 33b faces the wavelength conversion section 14. The light is radiated from the first irradiation surface 33b toward a position in which the wavelength conversion section 14 is provided.

The light is radiated from the second irradiation surface 33c toward a position different from the position in which the wavelength conversion section 14 is provided.

In a case of the light guide section 33, the first irradiation surface 33b faces the incident surface 33a. The second irradiation surface 33c is provided so as to extend in a direction intersecting (orthogonal to in FIG. 4) the direction in which the first irradiation surface 33b extends. Furthermore, fine concave and convex portions are provided in the second irradiation surface 33c. For example, the second irradiation surface 33c is a rough surface. In this case, the second irradiation surface 33c may be formed by performing a blast process or the like. Moreover, when molding the light guide section 33, the second irradiation surface 33c may be formed by transferring the rough surface provided in a mold.

Moreover, the first irradiation surface 33b and the second irradiation surface 33c are exposed from the holding sections 2b and 20b similar to the light guide section 13 described above.

Furthermore, the material of the light guide section 33 or the cross-sectional shape of the light guide section 33 in a direction orthogonal to the central axis CL may be the same as the case of the light guide section 13 described above.

The light radiated from the light emitting section 12 is introduced into the light guide section 33 through the incident surface 33a. The light introduced into the light guide section 33 propagates while being totally reflected on the inside of the light guide section 33.

The light propagating the inside of the light guide section 33 is introduced into the wavelength conversion section 14 through the first irradiation surface 33b.

The wavelength of the light introduced into the wavelength conversion section 14 is converted and the light is radiated from the wavelength conversion section 14 to the outside.

Here, fine concave and convex portions are provided in the second irradiation surface 33c. Thus, some of the light incident on the second irradiation surface 33c among the light propagating the inside of the light guide section 33 is radiated to the outside through the second irradiation surface 33c.

Thus, the light guide section 33 can obtain the effect similar to the light guide section 13 described above.

FIG. 5 is a schematic cross-sectional view illustrating a light guide section 43 according to still another embodiment.

As illustrated in FIG. 5, the light guide section 43 has a columnar shape.

The light guide section 43 has an incident surface 43a, a first irradiation surface 43b, and a second irradiation surface 43c.

The incident surface 43a faces the irradiation surface of the light emitting section 12.

The first irradiation surface 43b faces the wavelength conversion section 14. The light is radiated from the first irradiation surface 43b toward a position in which the wavelength conversion section 14 is provided.

The light is radiated from the second irradiation surface 43c toward a position different from the position in which the wavelength conversion section 14 is provided.

In a case of the light guide section 43, the first irradiation surface 43b faces the incident surface 43a. The second irradiation surface 43c is provided so as to extend in a direction intersecting (orthogonal to in FIG. 5) the direction in which the first irradiation surface 43b extends. Furthermore, cylindrical concave and convex portions are provided in the second irradiation surface 43c. The shape of the concave and convex portion is not specifically limited as long as a total reflection condition is broken. For example, the concave and convex portion may have a prism shape, a cone shape, a pyramid shape, a truncated cone shape, and the like. When molding the light guide section 43, the second irradiation surface 43c may be formed by transferring the concave and convex portion provided in a mold.

Moreover, the first irradiation surface 43b and the second irradiation surface 43c are exposed from the holding sections 2b and 20b similar to the light guide section 13 described above.

Furthermore, the material of the light guide section 43 or the cross-sectional shape of the light guide section 43 in a direction orthogonal to the central axis CL may be the same as the case of the light guide section 13 described above.

The light radiated from the light emitting section 12 is introduced into the light guide section 43 through the incident surface 43a. The light introduced into the light guide section 43 propagates while being totally reflected on the inside of the light guide section 43.

The light propagating the inside of the light guide section 43 is introduced into the wavelength conversion section 14 through the first irradiation surface 43b.

The wavelength of the light introduced into the wavelength conversion section 14 is converted and the light is radiated from the wavelength conversion section 14 to the outside.

Here, the cylindrical concave and convex portions are provided in the second irradiation surface 43c. Thus, some of the light incident on the second irradiation surface 43c among the light propagating the inside of the light guide section 43 is radiated to the outside through the second irradiation surface 43c.

Thus, the light guide section 43 can obtain the effect similar to the light guide section 13 described above.

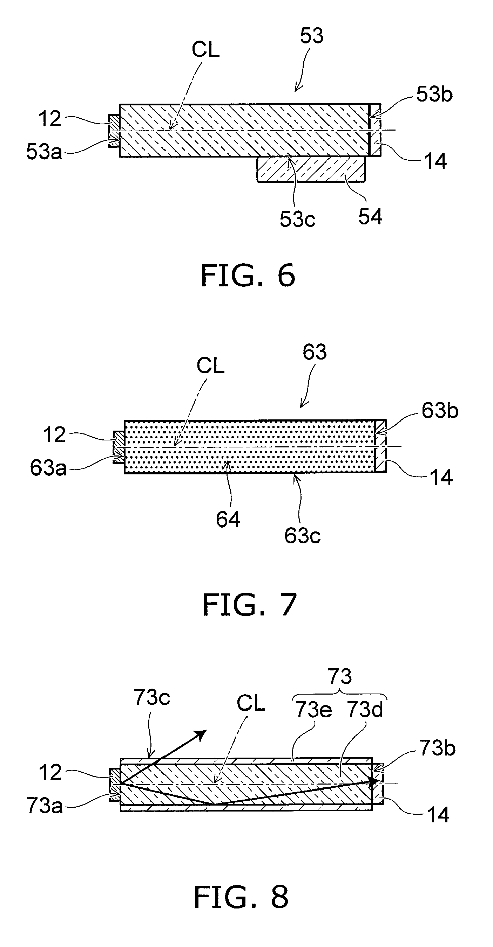

FIG. 6 is a schematic cross-sectional view illustrating a light guide section 53 according to still another embodiment.

As illustrated in FIG. 6, the light guide section 53 has a columnar shape.

In this case, a light leak section 54 in contact with a second irradiation surface 53c is further provided in the light emitting device.

The light guide section 53 has an incident surface 53a, a first irradiation surface 53b, and the second irradiation surface 53c.

The incident surface 53a faces the irradiation surface of the light emitting section 12.

The first irradiation surface 53b faces the wavelength conversion section 14. The light is radiated from the first irradiation surface 53b toward a position in which the wavelength conversion section 14 is provided.

The light is radiated from the second irradiation surface 53c toward a position different from the position in which the wavelength conversion section 14 is provided.

In a case of the light guide section 53, the first irradiation surface 53b faces the incident surface 53a. The second irradiation surface 53c is provided so as to extend in a direction intersecting (orthogonal to in FIG. 6) the direction in which the first irradiation surface 53b extends. Furthermore, the second irradiation surface 53c is a contact surface with the light leak section 54. A region that does not come into contact with the light leak section 54 comes into contact with outside air (air).

A difference between a refractive index of the light leak section 54 and a refractive index of the light guide section 53 is smaller than that between a refractive index of air and the refractive index of the light guide section 53.

For example, the light guide section 53 may be formed of acrylic and the light leak section 54 may be formed of silicone. In this case, a critical angle of an interface between the light guide section 53 formed of acrylic and air is 42.2°. A critical angle of an interface between the light guide section 53 formed of acrylic and the light leak section 54 formed of silicone is 73.7°. Thus, the total reflection is unlikely to occur on the second irradiation surface 53c that is a contact surface with the light leak section 54. Thus, some of the light incident on the second irradiation surface 53c is radiated to the outside through the second irradiation surface 53c.

It is preferable that air does not enter between the light leak section 54 and the light guide section 53.

Therefore, for example, it is preferable that the light leak section 54 be formed of silicone, rubber, elastomer, and the like.

Furthermore, an adhesive layer may be interposed between the light leak section 54 and the light guide section 53.

For example, the light leak section 54 formed of resin or metal may be formed to match outer dimensions of the light guide section 53 and the light leak section 54, and the light leak section 54 and the light guide section 53 may be bonded together through adhesive. Furthermore, the light guide section 53 and the light leak section 54 having a film shape formed of resin and the like may be bonded together through adhesive.

Moreover, the first irradiation surface 53b and the second irradiation surface 53c are exposed from the holding sections 2b and 20b similar to the light guide section 13 described above.

Furthermore, the material of the light guide section 53 or the cross-sectional shape of the light guide section 53 in a direction orthogonal to the central axis CL may be the same as the case of the light guide section 13 described above.

The light radiated from the light emitting section 12 is introduced into the light guide section 53 through the incident surface 53a. The light introduced into the light guide section 53 propagates while being totally reflected on the inside of the light guide section 53.

The light propagating the inside of the light guide section 53 is introduced into the wavelength conversion section 14 through the first irradiation surface 53b.

The wavelength of the light introduced into the wavelength conversion section 14 is converted and the light is radiated from the wavelength conversion section 14 to the outside.

Here, the second irradiation surface 53c is the contact surface with the light leak section 54. Thus, some of the light incident on the second irradiation surface 53c among the light propagating the inside of the light guide section 53 is radiated to the outside through the second irradiation surface 53c.

Thus, the light guide section 53 can obtain the effect similar to the light guide section 13 described above.

FIG. 7 is a schematic cross-sectional view illustrating a light guide section 63 according to still another embodiment.

As illustrated in FIG. 7, the light guide section 63 has a columnar shape.

The light guide section 63 has an incident surface 63a, a first irradiation surface 63b, and a second irradiation surface 63c.

The incident surface 63a faces the irradiation surface of the light emitting section 12.

The first irradiation surface 63b faces the wavelength conversion section 14. The light is radiated from the first irradiation surface 63b toward a position in which the wavelength conversion section 14 is provided.

The light is radiated from the second irradiation surface 63c toward a position different from the position in which the wavelength conversion section 14 is provided.

In a case of the light guide section 63, the first irradiation surface 63b faces the incident surface 63a. The second irradiation surface 63c is provided so as to extend in a direction intersecting (orthogonal to in FIG. 7) the direction in which the first irradiation surface 63b extends. Furthermore, the second irradiation surface 63c is an outer wall surface (side wall surface) of a region including a diffusion material 64 of the light guide section 63. In a case of FIG. 7, the diffusion material 64 is included in all regions of the light guide section 63. Thus, all of the side wall surface of the light guide section 63 is the second irradiation surface 63c.

In this case, it is possible to change a position or an area of the second irradiation surface 63c by localizing the diffusion material 64. For example, if the diffusion material 64 of the light guide section 63 is located on the side of the wavelength conversion section 14, the outer wall surface of the light guide section 63 on the side of the wavelength conversion section 14 is the second irradiation surface 63c.

The light guide section 63 may be formed by diffusing the diffusion material 64 formed of a material having a refractive index different from that of a translucent material into the translucent material.

For example, the translucent material may be glass, polycarbonate, polystyrene, acrylic, and the like.

For example, the diffusion material 64 may be formed of particles of silica, calcium carbonate, barium sulfate, polystyrene, acrylic, titanium oxide, silicone, and the like.

An optical path of the light incident on the diffusion material 64 is bent according to a difference between a refractive index of the translucent material and a refractive index of the diffusion material 64. Thus, the light incident on the diffusion material 64 is radiated to the outside through the second irradiation surface 63c.

Moreover, the first irradiation surface 63b and the second irradiation surface 63c are exposed from the holding sections 2b and 20b similar to the light guide section 13 described above. In this case, if the diffusion material 64 is included in all regions of the light guide section 63, a part of the second irradiation surface 63c is exposed from the holding sections 2b and 20b. Furthermore, the cross-sectional shape of the light guide section 63 in the direction orthogonal to the central axis CL may be the same as that of the light guide section 13 described above.

The light radiated from the light emitting section 12 is introduced into the light guide section 63 through the incident surface 63a. The light introduced into the light guide section 63 propagates while being totally reflected on the inside of the light guide section 63.

The light propagating the inside of the light guide section 63 is introduced into the wavelength conversion section 14 through the first irradiation surface 63b.

The wavelength of the light introduced into the wavelength conversion section 14 is converted and the light is radiated from the wavelength conversion section 14 to the outside.

Here, the optical path of the light incident on the diffusion material 64 is bent according to a difference between a refractive index of the translucent material and a refractive index of the diffusion material 64. Thus, some of the light incident on the diffusion material 64 among the light propagating the inside of the light guide section 63 is radiated to the outside through the second irradiation surface 63c.

Thus, the light guide section 63 can obtain the effect similar to the light guide section 13 described above.

FIG. 8 is a schematic cross-sectional view illustrating a light guide section 73 according to still another embodiment.

As illustrated in FIG. 8, the light guide section 73 has a columnar shape.

The light guide section 73 has a core section 73d that propagates the light radiated from the light emitting section 12 and a clad section 73e that covers a surface of the core section 73d in a direction intersecting the direction in which the light propagates.

The light guide section 73 has an incident surface 73a, a first irradiation surface 73b, and a second irradiation surface 73c.

The incident surface 73a and the first irradiation surface 73b are surfaces that are not covered by the clad section 73e among the surface of the core section 73d.

The second irradiation surface 73c is an outer wall surface of the clad section 73e.

The incident surface 73a faces the irradiation surface of the light emitting section 12.

The first irradiation surface 73b faces the wavelength conversion section 14. The light is radiated from the first irradiation surface 73b toward a position in which the wavelength conversion section 14 is provided.

The light is radiated from the second irradiation surface 73c toward a position different from the position in which the wavelength conversion section 14 is provided.

In a case of the light guide section 73, the first irradiation surface 73b faces the incident surface 73a. The second irradiation surface 73c is provided so as to extend in a direction intersecting (orthogonal to in FIG. 8) the direction in which the first irradiation surface 73b extends.

Here, a relationship between a light distribution angle of a light source and a numerical aperture satisfies the following Expression (1) in an optical fiber or the like simply propagating the light.

$$2\theta_{1/2} < \mathrm{Sin}^{-1}\mathrm{NA} \cdots (1)$$

Here, $2\theta_{1/2}$ is the light distribution angle of the light source and NA is the numerical aperture.

Furthermore, the numerical aperture is represented as the following Expression (2).

$$\mathrm{NA} = (N_1{}^2 - N_2{}^2)^{1/2} \cdots (2)$$

Here, $N_1$ is a refractive index of the core section and $N_2$ is a refractive index of the clad section.

If the relationship between the light distribution angle of the light source and the numerical aperture is as described above, most of the light radiated from the light emitting section 12 is radiated from the first irradiation surface 73b toward the outside. Thus, the second irradiation surface 73c does not exist in the optical fiber or the like simply propagating the light.

In contrast, in the light guide section 73 according to the embodiment, the relationship between the light distribution angle of the light emitting section 12 that is the light source and the numerical aperture satisfies the following Expression (3).

For example, the following Expression (3) is satisfied by selecting a type (light distribution angle) of the light emitting element 12b, a material (refractive index) of the core section, a material (refractive index) of the clad section, and the like.

$$2\theta_{1/2} \geq \mathrm{Sin}^{-1}\mathrm{NA} \cdots (3)$$

In this case, the light in which a light emitting accuracy θ satisfies θ<Sin⁻¹NA among the light radiated from the light emitting section 12 is totally reflected at an interface between the core section 73d and the clad section 73e and is not radiated to the outside.

In contrast, the light in which a light emitting accuracy θ satisfies θ>Sin⁻¹NA among the light radiated from the light emitting section 12 is not totally reflected at the interface between the core section 73d and the clad section 73e and is incident on the clad section 73e. Then, some of the light incident on the clad section 73e is radiated to the outside.

Moreover, the first irradiation surface 73b is exposed from the holding sections 2b and 20b similar to the light guide section 13 described above. Furthermore, at least a part of the second irradiation surface 73c is exposed from the holding sections 2b and 20b.

Furthermore, the cross-sectional shape of the light guide section 73 in the direction orthogonal to the central axis CL can be the same as that of the light guide section 13 described above.

The light radiated from the light emitting section 12 is introduced into the core section 73d through the incident surface 73a. The light introduced into the core section 73d propagates while being totally reflected on the inside of the core section 73d.

The light propagating the inside of the core section 73d is introduced into the wavelength conversion section 14 through the first irradiation surface 73b.

The wavelength of the light introduced into the wavelength conversion section 14 is converted and the light is radiated from the wavelength conversion section 14 to the outside.

Here, the light guide section 73 satisfies the Expression (3) described above. Thus, some of the light propagating the inside of the core section 73d is radiated to the outside through the second irradiation surface 73c. Thus, the light guide section 73 can obtain the effect similar to the light guide section 13 described above.

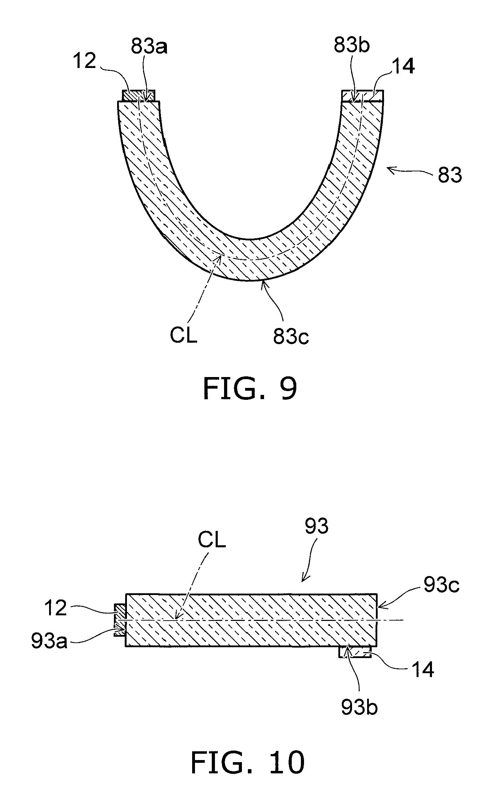

FIG. 9 is a schematic cross-sectional view illustrating a light guide section 83 according to still another embodiment.

As illustrated in FIG. 9, the light guide section 83 has a curved columnar shape.

The light guide section 83 has an incident surface 83a, a first irradiation surface 83b, and a second irradiation surface 83c.

The incident surface 83a faces the irradiation surface of the light emitting section 12.

The first irradiation surface 83b faces the wavelength conversion section 14. The light is radiated from the first irradiation surface 83b toward a position in which the wavelength conversion section 14 is provided.

The light is radiated from the second irradiation surface 83c toward a position different from the position in which the wavelength conversion section 14 is provided.

The second irradiation surface 83c is a curved surface provided between the incident surface 83a and the first irradiation surface 83b.

For example, the light guide section 83 illustrated in FIG. 9 is curved in a U shape and the curved surface is the second irradiation surface 83c.

Here, if the curved section is provided in a member in which the light propagates, the total reflection condition is reduced by a curved angle. Thus, the light is radiated from the curved surface to the outside.

Moreover, the first irradiation surface 83b and the second irradiation surface 83c are exposed from the holding sections 2b and 20b similar to the light guide section 13 described above.

Furthermore, the material of the light guide section 83 or the cross-sectional shape of the light guide section 83 in a direction orthogonal to the central axis CL may be the same as the case of the light guide section 13 described above.

The light radiated from the light emitting section 12 is introduced into the light guide section 83 through the incident surface 83a. The light introduced into the light guide section 83 propagates while being totally reflected on the inside of the light guide section 83.

The light propagating the inside of the light guide section 83 is introduced into the wavelength conversion section 14 through the first irradiation surface 83b.

The wavelength of the light introduced into the wavelength conversion section 14 is converted and the light is radiated from the wavelength conversion section 14 to the outside.

Here, the second irradiation surface 83c is the curved surface. Thus, some of the light propagating the inside of the light guide section 83 is radiated to the outside through the second irradiation surface 83c.

Thus, the light guide section 83 can obtain the effect similar to the light guide section 13 described above.

FIG. 10 is a schematic cross-sectional view illustrating a light guide section 93 according to still another embodiment. As illustrated in FIG. 10, the light guide section 93 has a columnar shape.

The light guide section 93 has an incident surface 93a, a first irradiation surface 93b, and a second irradiation surface 93c.

The incident surface 93a faces the irradiation surface of the light emitting section 12.

The first irradiation surface 93b faces the wavelength conversion section 14. The light is radiated from the first irradiation surface 93b toward a position in which the wavelength conversion section 14 is provided.

The light is radiated from the second irradiation surface 93c toward a position different from the position in which the wavelength conversion section 14 is provided.

The position of the first irradiation surface and the position of the second irradiation surface are reversed in the columnar body of the light guide section 93 according to the embodiment compared to the light guide sections 33, 43, and 53 illustrated in FIGS. 4 to 6.

That is, in a case of the light guide section 93, an end surface of the columnar body is the second irradiation surface 93c and an outer wall surface (side wall surface) of the columnar body is the first irradiation surface 93b.

Means for radiating the light from the outer wall surface of the columnar body may be the same as those of the examples illustrated in FIGS. 4 to 6.

Moreover, the first irradiation surface 93b and the second irradiation surface 93c are exposed from the holding sections 2b and 20b similar to the light guide section 13 described above.

Furthermore, the material of the light guide section 93 or the cross-sectional shape of the light guide section 93 in a direction orthogonal to the central axis CL may be the same as the case of the light guide section 13 described above.

The light radiated from the light emitting section 12 is introduced into the light guide section 93 through the incident surface 93a. The light introduced into the light guide section 93 propagates while being totally reflected on the inside of the light guide section 93.

Some of the light propagating the inside of the light guide section 93 is introduced into the wavelength conversion section 14 through the first irradiation surface 93b.

The wavelength of the light introduced into the wavelength conversion section 14 is converted and the light is radiated from the wavelength conversion section 14 to the outside.

Furthermore, some of the light propagating the inside of the light guide section 93 is radiated to the outside through the second irradiation surface 93c.

Thus, the light guide section 93 can obtain the effect similar to the light guide section 13 described above.

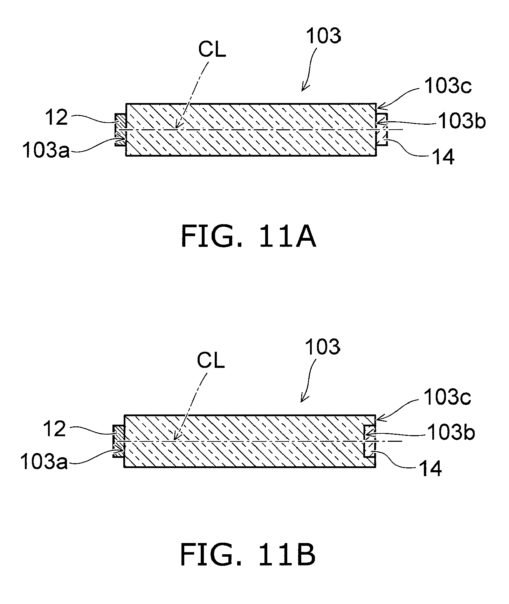

FIGS. 11A and 11B are schematic cross-sectional views illustrating a light guide section 103 according to still another embodiment.

Moreover, FIG. 11A illustrates a case where the wavelength conversion section 14 is provided on an end surface of a columnar body and FIG. 11B illustrates a case where the wavelength conversion section 14 is provided in the inside of a concave section provided on an end surface of a columnar body.

As illustrated in FIGS. 11A and 11B, the light guide section 103 has a columnar shape.

The light guide section 103 has an incident surface 103a, a first irradiation surface 103b, and a second irradiation surface 103c.

The incident surface 103a faces the irradiation surface of the light emitting section 12.

The first irradiation surface 103b faces the wavelength conversion section 14. The light is radiated from the first irradiation surface 103b toward a position in which the wavelength conversion section 14 is provided.

The light is radiated from the second irradiation surface 103c toward a position different from the position in which the wavelength conversion section 14 is provided.

In the light guide section 103 according to the embodiment, a surface facing the wavelength conversion section 14 among the surfaces provided in the end section of the columnar body is the first irradiation surface 103b and a surface that does not face the wavelength conversion section 14 is the second irradiation surface 103c.

For example, as illustrated in FIG. 11A, in the end surface of the columnar body, a region that faces the wavelength conversion section 14 may be the first irradiation surface 103b and a region that does not face the wavelength conversion section 14 may be the second irradiation surface 103c.

Furthermore, as illustrated in FIG. 11B, in the end section of the columnar body, a bottom surface of the concave section in which the wavelength conversion section 14 is provided may be the first irradiation surface 103b and the end surface of the columnar body may be the second irradiation surface 103c.

Moreover, the first irradiation surface 103b and the second irradiation surface 103c are exposed from the holding sections 2b and 20b similar to the light guide section 13 described above.

Furthermore, the material of the light guide section 103 or the cross-sectional shape of the light guide section 103 in a direction orthogonal to the central axis CL may be the same as the case of the light guide section 13 described above.

The light radiated from the light emitting section 12 is introduced into the light guide section 103 through the incident surface 103a. The light introduced into the light guide section 103 propagates while being totally reflected on the inside of the light guide section 103.

Some of the light propagating the inside of the light guide section 103 is introduced into the wavelength conversion section 14 through the first irradiation surface 103b.

The wavelength of the light introduced into the wavelength conversion section 14 is converted and the light is radiated from the wavelength conversion section 14 to the outside.

Some of the light propagating the inside of the light guide section 103 is radiated to the outside through the second irradiation surface 103c.

Thus, the light guide section 103 can obtain the effect similar to the light guide section 13 described above.

As described above, embodiments of the light guide section are illustrated, but the configuration of the light guide section is not limited to the embodiments. The light guide section may have a first irradiation surface for radiating the light radiated from the light emitting section 12 toward the wavelength conversion section 14, and a second irradiation surface for radiating the light radiated from the light emitting section 12 toward a portion other than the wavelength conversion section 14.

However, if the lighting device 1 is used in a vehicle or the like, it is preferable that a major portion of the light radiated from the light emitting section 12 be radiated from the first irradiation surface.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Moreover, the above-mentioned embodiments can be combined mutually and can be carried out.

**Claims**

1.  A light emitting device (10) comprising:

    a light emitting section (12) that has a light emitting element (12b);
    a wavelength conversion section (14) that absorbs light radiated from the light emitting section (12) and emits the light having a wavelength different from that of the light radiated from the light emitting section (12); and
    a light guide section (13, 23, 33, 43, 53, 63, 73, 83, 93, and 103) that is provided between the light emitting section (12) and the wavelength conversion section (14) and to propagate the light radiated from the light emitting section (12), and includes a first irradiation surface (13b, 23b, 33b 43b, 53b, 63b, 73b, 83b, 93b, and 103b) which radiates the propagated light toward a position in which the wavelength conversion section (14) is provided, and a second irradiation surface (13c, 23c, 33c, 43c, 53c, 63c, 73c, 83c, 93c, and 103c) which radiates the propagated light toward a position different from the position in which the wavelength conversion section (14) is provided.

2.  The device (10) according to claim 1,
    wherein the light guide section (13 and 23) has at least one of a shape in which a cross-sectional area in a direction orthogonal to a central axis is decreased gradually as being closer to an end section on the side in which the wavelength conversion section (14) is provided and a shape in which the cross-sectional area is decreased in stages as being closer to the end section, and
    wherein the second irradiation surface (13c and 23c) is provided in at least one of a region in which the cross-sectional area is decreased gradually and a region in which the cross-sectional area is decreased in stages.

3.  The device (10) according to claim 1 or 2,
    wherein the second irradiation surface (33c and 43c) is provided with a concave and convex portion.

4.  The device (10) according to any one of claims 1 to 3, further comprising:

    a light leak section (54) that comes into contact with the second irradiation surface (53c),
    wherein a difference between a refractive index of the light leak section (54) and a refractive index of the light guide section (53) is smaller than that between a refractive index of air and the refractive index of the light guide section (53).

5.  The device (10) according to claim 1,
    wherein the light guide section (73) has a core section (73d) that propagates the light radiated from the light emitting section (12) and a clad section (73e) that covers a surface of the core section (73d) in a direction intersecting a direction in which the light is propagated, and
    wherein the following expression is satisfied,

    $$2\theta_{1/2} \geq \mathrm{Sin}^{-1}NA$$

    here, $2\theta_{1/2}$ is a light distribution angle of the light emitting section (12) and NA is a numerical aperture.

6.  A lighting device (1) comprising:

    the light emitting device (10) according to any one of claims 1 to 5; and
    a housing (2) that stores the light emitting section (12) provided in the light emitting device (10) and holds the light guide section (13, 23, 33, 43, 53, 63, 73, 83, 93, and 103) provided in the light emitting device (10).

7.  The device (1) according to claim 6,
    wherein the wavelength conversion section (14) provided in the light emitting device (10) is provided at a focal point of a reflector (100) of a lamp fitting when mounting the lighting device (1) on the lamp fitting.

FIG. 1A

FIG. 1B

FIG. 2A

FIG. 2B

FIG. 3

FIG. 4

FIG. 5

FIG. 6

FIG. 7

FIG. 8

12  83a          83b  14

CL                    83

CL        83c

**FIG. 9**

CL        93

12                    93c
93a

14

93b

**FIG. 10**

FIG. 11A

FIG. 11B

Europäisches
Patentamt

European
Patent Office

Office européen
des brevets

# EUROPEAN SEARCH REPORT

**Application Number**

EP 14 17 3793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/192458 A1 (LI YI-QUN [US]) 14 August 2008 (2008-08-14) * paragraphs [0013], [0031], [0032], [0041] * * figure 1 * | 1,3-7 | INV. F21K99/00 F21S8/10 F21V8/00 F21V9/16 G02B6/00 |
| X | US 2012/081880 A1 (NARENDRAN NADARAJAH [US] ET AL) 5 April 2012 (2012-04-05) * paragraphs [0013], [0051], [0053], [0064], [0065] * * figures 3, 4c-4e * | 1,2,6,7 | ADD. F21Y101/02 |
| X | US 2012/212931 A1 (KINOSHITA JUNICHI [JP] ET AL) 23 August 2012 (2012-08-23) * paragraphs [0020], [0021], [0028], [0029], [0041] * * figures 4c,8a * | 1,4-6 | |
| A | US 2005/084229 A1 (BABBITT VICTOR [US] ET AL) 21 April 2005 (2005-04-21) * paragraph [0011] - paragraph [0016] * * figure 9 * | 1-7 | TECHNICAL FIELDS SEARCHED (IPC) |
| A | US 2011/286200 A1 (IIMURA KEIJI [JP] ET AL) 24 November 2011 (2011-11-24) * paragraph [0271] - paragraph [0294] * * figures 29A-33E, 37A-D * | 1-7 | F21K F21S G02B F21V |

The present search report has been drawn up for all claims

| Place of search | Date of completion of the search | Examiner |
|---|---|---|
| The Hague | 6 November 2014 | Dinkla, Remko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 3793

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2014

| Patent document cited in search report | | Publication date | Patent family member(s) | | Publication date |
|---|---|---|---|---|---|
| US 2008192458 | A1 | 14-08-2008 | CN | 101641623 A | 03-02-2010 |
| | | | CN | 102121627 A | 13-07-2011 |
| | | | EP | 2122396 A2 | 25-11-2009 |
| | | | JP | 2010518587 A | 27-05-2010 |
| | | | JP | 2013243139 A | 05-12-2013 |
| | | | KR | 20100014977 A | 11-02-2010 |
| | | | TW | 200834000 A | 16-08-2008 |
| | | | US | 2008192458 A1 | 14-08-2008 |
| | | | US | 2010188839 A1 | 29-07-2010 |
| | | | US | 2010188867 A1 | 29-07-2010 |
| | | | WO | 2008100277 A2 | 21-08-2008 |
| US 2012081880 | A1 | 05-04-2012 | CA | 2765106 A1 | 16-12-2010 |
| | | | CN | 102460005 A | 16-05-2012 |
| | | | EP | 2440841 A2 | 18-04-2012 |
| | | | JP | 5438213 B2 | 12-03-2014 |
| | | | JP | 2012529751 A | 22-11-2012 |
| | | | KR | 20120039620 A | 25-04-2012 |
| | | | US | 2012081880 A1 | 05-04-2012 |
| | | | WO | 2010144572 A2 | 16-12-2010 |
| US 2012212931 | A1 | 23-08-2012 | CN | 102644861 A | 22-08-2012 |
| | | | JP | 2012174551 A | 10-09-2012 |
| | | | US | 2012212931 A1 | 23-08-2012 |
| US 2005084229 | A1 | 21-04-2005 | NONE | | |
| US 2011286200 | A1 | 24-11-2011 | NONE | | |

EPO FORM P0459

For more details about this annex : see Official Journal of the European Patent Office, No. 12/82